# EUROPEAN PATENT APPLICATION

(11) **EP 4 350 496 A1**
(43) Date of publication of application: **10.04.2024**
(21) Application number: 22810507.8
(22) Date of filing: 23.05.2022
(51) Int. Cl.: G06F 3/0482, G06F 9/445

(54) **PROGRAM CONTROL METHOD AND APPARATUS, ELECTRONIC DEVICE, AND READABLE STORAGE MEDIUM**

(30) Priority: 28.05.2021 CN 202110594337
(71) Applicant: Vivo Mobile Communication Co., Ltd., Dongguan, Guangdong 523863 (CN)
(72) Inventor: MA, Yi, Hangzhou, Zhejiang 311121 (CN)
(74) Representative: Conti, Marco
(86) International application number: PCT/CN2022/094449
(87) International publication number: WO 2022/247782

(57) **Abstract**

This application discloses a program control method and apparatus, an electronic device, and a readable storage medium, and pertains to the field of application program control technologies. The program control method includes: displaying a set of target components of a target application program, where the target widget includes at least one of a function component and a module component; receiving a first input on the target widget; and in response to the first input, updating display information of the target widget and updating display information and loading information in a program screen of the target application program; where the updating content of the display information and loading information in the program screen of the target application program are associated with the updating content of the display information of the target widget.

## Description

### CROSS-REFERENCE TO RELATED APPLICATIONS

This application claims priority to Chinese Patent Application No. 202110594337.X, filed in China on May 28, 2021, which is incorporated herein by reference in its entirety.

### TECHNICAL FIELD

This application pertains to the field of application program control technologies and specifically relates to a program control method and apparatus, an electronic device, and a readable storage medium.

### BACKGROUND

In the related art, after a specific application program is started, modules and the like loaded by the application program and displayed in an application program screen remain fixed. For example, for a same application program started on different electronic devices, a same application program homepage is displayed on different electronic devices.

Thus, it can be seen that the display content and loading content of the application program in the related art have the defect of poor flexibility.

### SUMMARY

An objective of embodiments of this application is to provide a program control method and apparatus, an electronic device, and a readable storage medium, so as to solve the problem that the display content and loading content of the application program in the related art have the poor flexibility.

To solve the preceding technical problem, this application is implemented as follows.

According to a first aspect, an embodiment of this application provides a program control method, where the method includes:
displaying a target widget of a target application program, where the target widget includes at least one of a function component and a module component;
receiving a first input on the target widget; and
in response to the first input, updating display information of the target widget and updating display information and loading information in a program screen of the target application program; wherein
the updating content of the display information and loading information in the program screen of the target application program are associated with the updating content of the display information of the target widget.

According to a second aspect, an embodiment of this application provides a program control apparatus including:
a displaying module configured to display a target widget of a target application program, where the target widget includes at least one of a function component and a module component;
a receiving module configured to receive a first input on the target widget; and
an updating module configured to, in response to the first input, update display information of the target widget and update display information and loading information in a program screen of the target application program; where
the updating content of the display information and loading information in the program screen of the target application program are associated with the updating content of the display information of the target widget.

According to a third aspect, an embodiment of this application provides an electronic device, where the electronic device includes a processor, a memory, and a program or instructions stored in the memory and capable of running on the processor, where when the program or instructions are executed by the processor, the steps of the method according to the first aspect are implemented.

According to a fourth aspect, an embodiment of this application provides a readable storage medium, where the readable storage medium stores a program or instructions, and when the program or instructions are executed by a processor, the steps of the method according to the first aspect are implemented.

According to a fifth aspect, an embodiment of this application provides a chip, where the chip includes a processor and a communications interface, the communications interface is coupled to the processor, and the processor is configured to run a program or instructions so as to implement the method according to the first aspect.

According to a sixth aspect, an embodiment of this application provides a computer program product, where the computer program product is stored in a non-transitory storage medium, and the computer program product is executed by at least one processor to implement the method according to the first aspect.

In the control method provided in the embodiments of this application, a target widget of a target application program is displayed, where the target widget includes at least one of a function component and a module component; a first input on the target widget is received; and in response to the first input, display information of the target widget is updated and display information and loading information in a program screen of the target application program are updated; where the updating content of the display information and loading information in the program screen of the target application program are associated with the updating content of the display information of the target widget. In this way, the loading information and display information of the target application program can be adjusted through the operations on the target widget, for example, implementing cutting or merging of functions and modules in the target application program, so as to load and display according to the cut or merged functions and modules, so that the display information and loading information of the target application program are more diversified, thereby improving the flexibility of the display content and loading content of the application program.

### BRIEF DESCRIPTION OF DRAWINGS

FIG. 1 is a flowchart of a program control method according to an embodiment of this application;
FIG. 2a is a first application scenario diagram of a program control method according to an embodiment of this application;
FIG. 2b is a second application scenario diagram of a program control method according to an embodiment of this application;
FIG. 2c is a third application scenario diagram of a program control method according to an embodiment of this application;
FIG. 2d is a fourth application scenario diagram of a program control method according to an embodiment of this application;
FIG. 3 is a first flowchart of a program control method according to an embodiment of this application;
FIG. 4 is a second flowchart of a program control method according to an embodiment of this application;
FIG. 5a is a first application scenario diagram of a program control method according to an embodiment of this application;
FIG. 5b is a second application scenario diagram of a program control method according to an embodiment of this application;
FIG. 5c is a third application scenario diagram of a program control method according to an embodiment of this application;
FIG. 5d is a fourth application scenario diagram of a program control method according to an embodiment of this application;
FIG. 5e is a fifth application scenario diagram of a program control method according to an embodiment of this application;
FIG. 5f is a sixth application scenario diagram of a program control method according to an embodiment of this application;
FIG. 6 is a structural diagram of a program control apparatus according to an embodiment of this application;
FIG. 7 is a first structural diagram of an electronic device according to an embodiment of this application; and
FIG. 8 is a second structural diagram of an electronic device according to an embodiment of this application.

### DETAILED DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application without creative efforts shall fall within the protection scope of this application.

The terms "first", "second", and the like in this specification and claims of this application are used to distinguish between similar objects rather than to describe a specific order or sequence. It should be understood that data used in this way are interchangeable in appropriate circumstances so that the embodiments of this application can be implemented in an order other than those illustrated or described herein. In addition, "first" and "second" are typically used to distinguish objects of a same type and do not limit quantities of the objects. For example, there may be one or a plurality of first objects. In addition, "and/or" in the specification and claims represents at least one of connected objects, and the character "/" generally indicates an "or" relationship between the contextually associated objects.

The following describes in detail a program control method and apparatus, an electronic device, and a readable storage medium provided in the embodiments of this application by using specific embodiments and application scenarios thereof with reference to the accompanying drawings.

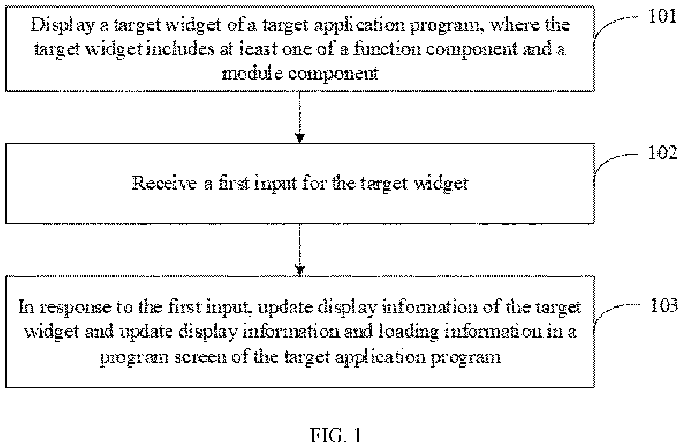

FIG. 1 is a flowchart of a program control method according to an embodiment of this application. As shown in FIG. 1, the program control method may include the following steps.

Step 101. Display a target widget of a target application program, where the target widget includes at least one of a function component and a module component.

In a specific implementation, the foregoing target application program may include 1, 2, or more application programs. In addition, the displaying a target widget corresponding to a target application program may refer to displaying target widgets in one-to-one correspondence with the application programs, that is to say, a different application program corresponds to a different target widget. One widget can be understood as a set of all components of an application program corresponding to the widget. The all components may specifically include at least one of a function component and a module component. In an implementation, different function components and module components may be regarded as different "atomic components".

It should be noted that the foregoing atomic components have the same meaning as the atomic components in the prior art; that is, the atomic components may include at least one of a function component and a module component, and each atomic component may have associated functions, modules, pages, tabs, or the like. Specifically, the function component refers to a component generated based on extraction of a main function of the application, such as play, previous, next, volume control, or other functions in a music or video playback application program while the module component refers to a component generated based on extraction of a page or tab (tab) in the application, such as a homepage, shopping cart, my account, and other modules in a shopping application program. In the prior art, when a user touches an atomic component, only functions or modules associated with the atomic component can be loaded, or pages associated with the atomic component can be displayed, where the pages can be specifically understood as pages in the application program and associated with the atomic component or pages in the application program and in which the functions or modules associated with the atomic component reside.

The difference from the prior art is that the atomic component provided in the embodiments of this application is associated with loading information and display information of functions, modules, or pages associated with the atomic component, so that when the user operates the atomic component, display states and loading states of the modules in the application program and associated with the atomic component can be updated. In addition, after the user has deleted a module component of an application program, when the application program is started, modules corresponding to the deleted module component are not loaded, thus saving running and storage space for the application program.

Step 102. Receive a first input on the target widget.

In a specific implementation, the receiving a first input on the target widget can be interpreted as: receiving a first input on at least one atomic component in the target widget, and the first input may be a touch input performed by a user on an electronic device. For example, the first input may include at least one touch input of tapping, sliding, and touching and holding on the atomic component, to adjust display position of the atomic component, associate the atomic component with other atomic components, delete this atomic component, or the like.

Step 103. In response to the first input, update display information of the target widget and update display information and loading information in a program screen of the target application program, where the updating content of the display information and loading information in the program screen of the target application program are associated with the updating content of the display information of the target widget.

In a first aspect, the updating display information of the target widget may include updating the number, arrangement order, and the like of atomic components in the target widget according to the type of the first input and the atomic component targeted by the first input. For example, if the first input is used to delete a particular atomic component, displaying of the particular atomic component in the target widget is canceled; and if the first input is used to exchange orders of atomic component A and atomic component B, then the atomic components and the like in the target widget are shown according to the order after exchanging.

In a second aspect, the updating display information in the program screen of the target application program may include adjusting display orders of pages in the target application program, increasing or decreasing modules displayed in the target application program screen, and the like.

In a third aspect, the updating loading information of the target application program may include prohibiting loading of program codes and data of a module corresponding to the deleted atomic component in the target application program.

In an implementation, the prohibiting loading of program codes and data of a module corresponding to the deleted atomic component in the target application program may be understood as only loading of program codes and data of modules corresponding to atomic components undeleted in the target application program.

The updating content of the display information and loading information in the program screen of the target application program being associated with the updating content of the display information of the target widget may be understood as that the display information of the atomic component displayed in the target widget matches the display information and loading information of the program screen of the target application program. For example, when displaying of the atomic component A is canceled in the target widget, no data of a module corresponding to the atomic component A is loaded, and no display content of the module corresponding to the atomic component A is displayed in the program screen of the target application program.

Optionally, the first input includes an operation input for adjusting the arrangement order of components in the target widget.

The updating display information of the target widget and the updating display information and loading information in a program screen of the target application program include:
displaying, according to the adjusted arrangement order, components in the target widget;
loading, according to the adjusted arrangement order, data of modules in the target application program respectively corresponding to the components in the target widget; and
displaying, according to the adjusted arrangement order, display content of modules in the target application program corresponding to components in the target widget.

In a specific implementation, the data of modules may be data such as program codes and resources of the modules; and the display content of modules may be a page displaying modules, tabs corresponding to the modules, or an entry for the modules, or the like.

In this implementation, the first input may be any operation for adjusting the arrangement order of the components in the target widget, for example, sliding a first atomic component in the target widget to a position at which a second atomic component is displayed to exchange positions of the first atomic component and the second atomic component.

In addition, the displaying, according to the adjusted arrangement order, display content of modules in the target application program corresponding to components in the target widget may refer to displaying the modules, pages, tabs, or the like in the target application program in sequence according to the same adjusted arrangement order of the atomic components in the target widget.

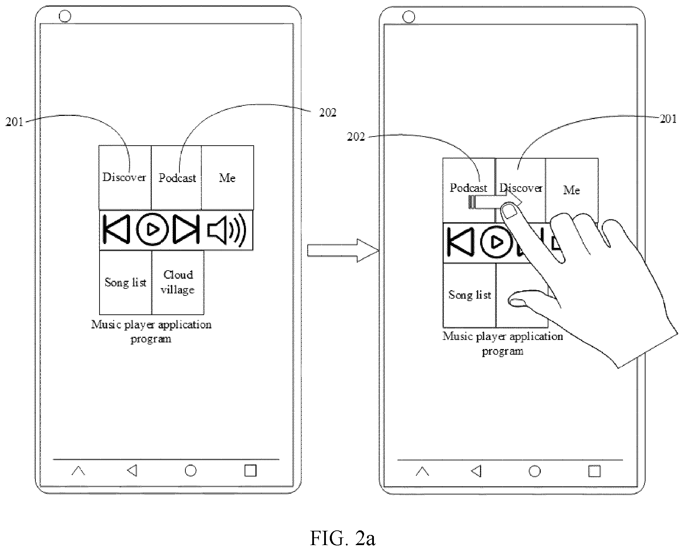

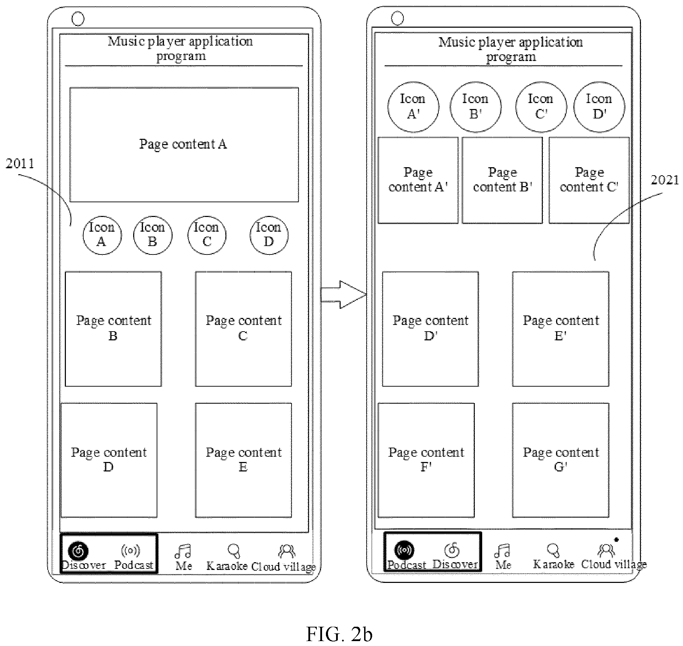

For example, as shown in FIG. 2a and FIG. 2b, assuming that default atomic components of a music player application program are arranged in the order shown in the left figure in FIG. 2a, a third atomic component 201 associated with a "Discover" page 2011 is displayed in the first place in a target widget of the music player application program, and in this case, when this music player application program is opened, a homepage displayed is as shown in the left figure in FIG. 2b, that is, the homepage of the music player application program defaults to the "Discover" page 2011. When a first input has been performed by a user to exchange and adjust positions of a fourth atomic component 202 associated with a "Podcast" page 2021 and the third atomic component 201, that is, after the positions are exchanged, atomic components of the music player application program are arranged in the order shown in the right figure in FIG. 2a, and then, when the music player application program is opened, the homepage displayed is as shown in the right figure in FIG. 2b, that is, the homepage of the music player application program defaults to the "Podcast" page 2021. In this way, the homepage and the page display order of the application program are adjusted.

Certainly, in a specific implementation, the position-adjusted atomic components may alternatively be other atomic components except the atomic component associated with the homepage.

In this implementation, the user can conveniently customize a loading order of each module and a display position and order of each page in the application program.

Optionally, the first input includes an input for deleting a first module component in the target widget.

The updating display information of the target widget and the updating display information and loading information in a program screen of the target application program include:
deleting the first module component;
prohibiting loading of data of a module corresponding to the first module component in the target application program; and
deleting display content of the module corresponding to the first module component in the program screen of the target application program.

In a specific implementation, the prohibiting loading of data of a module corresponding to the first module component in the target application program can be understood as follows: When the target application program is started, no data of the module corresponding to the first module component is loaded. In the implementation, in a case that a particular atomic component of the target application program has been deleted through the first input, when the target application program is started, it can be retrieved in the background that the particular module component has been deleted, so that no data of the module corresponding to the deleted module component is loaded, and only data of modules corresponding to atomic components undeleted is loaded.

In addition, the first module component may specifically be part of the module components in the target widget. In practical applications, different module components correspond to different executable files (for example, dex files) in an application package (for example, an application package (Android application package, APK) in an Android system). The executable file contains all operating instructions and running data of modules corresponding to the module component. In the related art, internal codes of the application package (for example, APK) are generally organized into different projects according to different modules or functions, and then the codes of different projects are compiled and allocated to different dex files. When the system starts the APK, the dex files are loaded sequentially in a specific order.

In this implementation, the prohibiting loading of data of a module corresponding to the first module component in the target application program may include, upon opening an application program, determining by the system a module corresponding to each component of the application program and whether the component has been deleted. If the component has been deleted, no dex file or resource of the module corresponding to the component is loaded into memory, and correspondingly, the corresponding module in the application program is not loaded either. When the user taps a module not loaded on the application program screen, a dex file corresponding to the module is dynamically loaded from a disk into the memory.

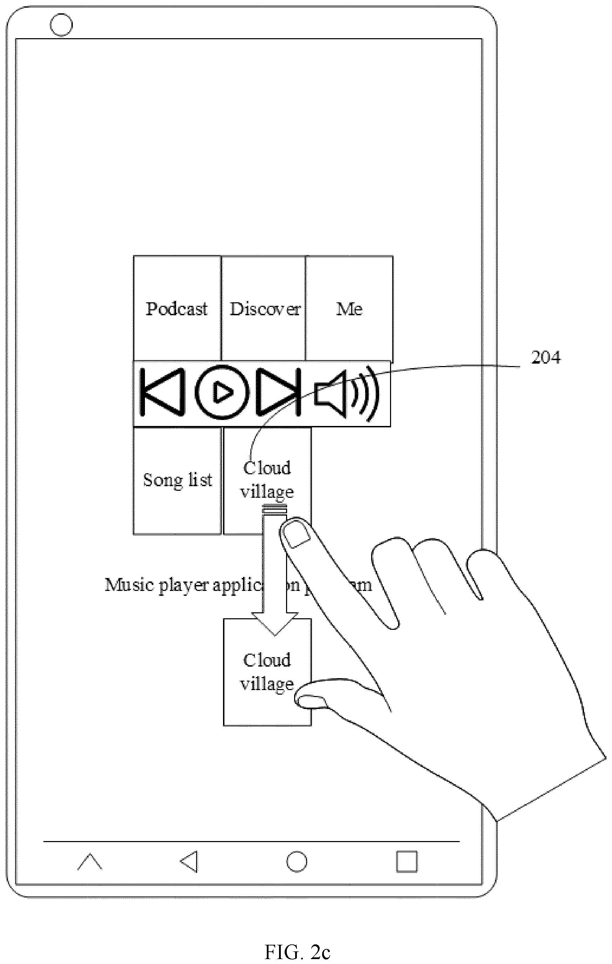

For example, as shown in FIG. 2c, assuming that a default target widget of a music player application program includes five module components: a "Podcast" component, a "Discover" component, a "Me" component, a "Songbook" component, and a "Cloud village" component, and that the foregoing first input may be used to delete a fifth atomic component 204 (that is, the "Cloud village" component) associated with the "Discover" page. In this way, when the music player application program is started after the fifth atomic component 204 is deleted, the "Cloud village" page will no longer be displayed in the screen of the music player application program.

The deleting display content of the module corresponding to the first module component in the program screen of the target application program may refer to skipping displaying the module corresponding to the first component, or the icon, entry, and the like of the module in the program screen of the target application program. In practical applications, a module not loaded may not be displayed in the application program screen, so that the user cannot tap on the module not loaded, and the application program does not need to perform a process of dynamically loading a dex file corresponding to the module from the disk into the memory when the user taps on the module not loaded.

In this implementation, in a case that one or some components in the target application program have been deleted, the data of the module corresponding to the component is not loaded when the target application program is started, thereby saving memory space; and in addition, the display content of the module corresponding to the component is not displayed, which can further hide the module corresponding to the module component in the screen of the target application program, thereby making the screen of the target application program more simplified.

In addition, when the first input includes at least one sub-input for deleting all module components in the target widget, the target application program can be deleted from the memory to save memory space, and only the function components of the target application program are displayed on the desktop, such as previous, next, play, pause, and other function components of the music player application program.

Optionally, the target widget includes at least one module component and at least one function component; and the first input includes at least one sub-input for deleting all module components in the target widget.

The updating display information of the target widget and the updating display information and loading information in a program screen of the target application program include:
uninstalling the target application program; and
in a case that a second input performed by a user on a first function component of the at least one function component has been received, loading data required for the first function component from a cloud server of the target application program or starting a Quick App corresponding to the first function component.

It should be noted that the first input may be an input for deleting all module components of the target application program at one time, or an input for deleting all module components of the target application program in several times.

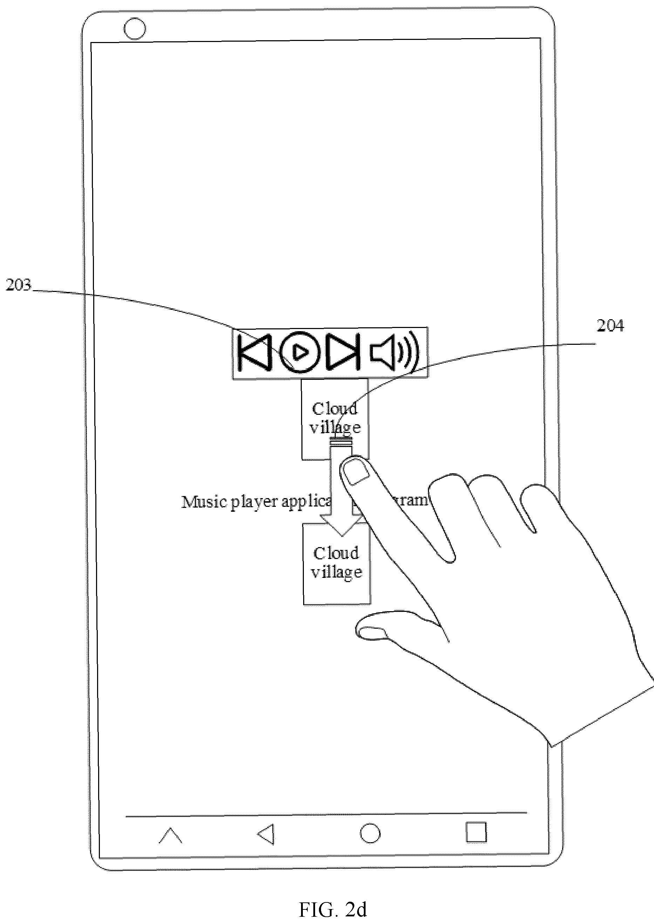

For example, as shown in FIG. 2d, assuming that there is only one module component (that is, the "Cloud village" component 204) left in the target widget of a particular music player application program, the first input is used to delete the "Cloud village" component 204. In this way, after the "Cloud village" component 204 has been deleted, only function components 203 of the music player application program are displayed on the desktop. The function components 203 are respectively play, previous, next, and volume adjustment. In this case, if the user taps one of the function components 203, data required for the function component 203 is loaded from a cloud server of the music player application program, or a Quick App (for example, an applet) corresponding to the function component 203 is started.

In addition, the second input may be used to control the first function component to execute a corresponding application program function. For example, assuming that the first application program is a music player application program, if the user taps on a play component, data required for the play component is loaded from a cloud server of the music player application program, or a Quick App corresponding to the music player application program is started, so as to execute the music play function of the music player application program. Certainly, in addition to the touch input, the second input may alternatively be another touch input on the first function component. For example, the second input includes one or more of touch inputs such as touching and holding, double-tapping, and sliding on the first function component.

In this implementation, in a case that all module components in the target component have been deleted, the target application program corresponding to the target widget can be uninstalled to reduce memory occupation of the target application program; and in addition, the function components of the target application are reserved while the target application program is being uninstalled, so that when a user operates a first function component thereof, a function corresponding to the first function component can be executed based on data loaded from the cloud server of the target application program or by starting an Quick App corresponding to the first function component.

It should be noted that an embodiment in which the first input includes an input on the first component in the target widget can be combined with an embodiment in which the first input includes at least one sub-input for deleting all module components in the target widget, and that in practical applications, based on a determination of whether a module component of a target application program is still present, it can be determined whether the application program is started to perform: prohibiting loading of data of a module corresponding to the first module component in the target application program, or deleting display content of the module corresponding to the first module component in the program screen of the target application program; or perform: uninstalling the target application program, or in a case that a second input performed by a user on a first function component of the at least one function component has been received, loading data required for the first function component from a cloud server of the target application program or starting a Quick App corresponding to the first function component.

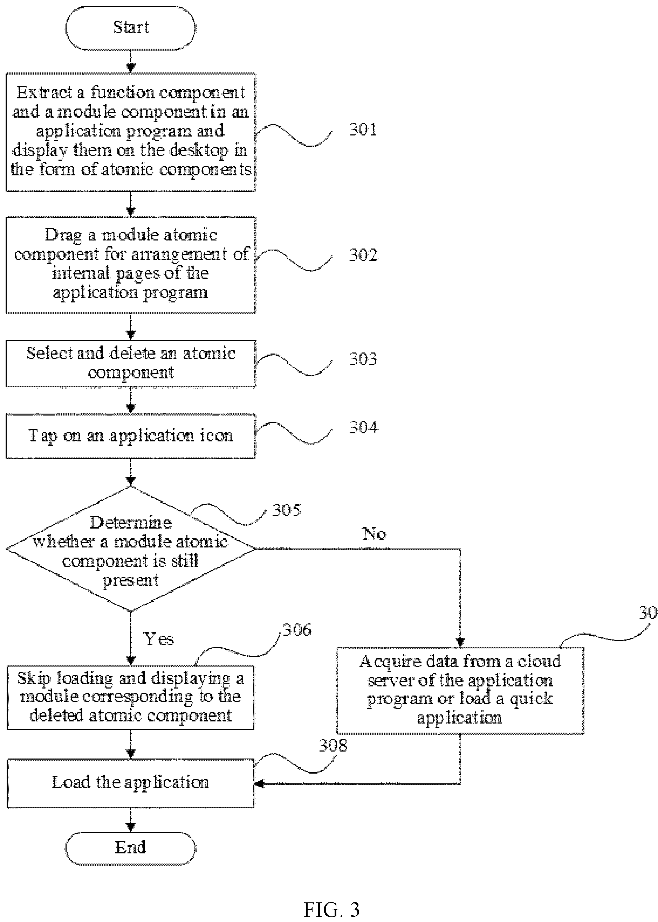

For example, a program control method shown in FIG. 3 may include the following steps.

Step 301. Extract a function component and a module component in an application program and display them on the desktop in the form of atomic components.

Step 302. Drag a module atomic component for arrangement of internal pages of the application program.

Step 303. Select and delete an atomic component.

This step may specifically be that a user drags the atomic component to a blank position to delete the atomic component.

Step 304. A user taps on an application icon.

This step may specifically be that the user taps on a function component of the application program, for example, a function component 203 shown in FIG. 2d.

Step 305. Determine whether a module atomic component is still present.

In this step, if a determined result is "Yes", step 306 is performed; or if a determined result is "No", step 307 is performed.

In an implementation, in a case that a determined result of this step is "Yes", it means that the atomic component deleted in step 303 is the last module component of the application program, or all module components of the application program have been deleted.

Step 306. Skip loading and displaying a module corresponding to the deleted atomic component.

Step 307. Acquire data from a cloud server of the application program or load a Quick App.

Before this step, the method may further include: deleting the application program from the memory and displaying only the function components of the application program on the desktop, and step 304 may involve tapping a function component of the application program.

Step 308. Start to load the application according to the settings in the above steps.

Optionally, the target application program includes a first application program and a second application program, the target widget includes a first widget of the first application program and a second widget of the second application program; and the first input is used to associate a first module component in the first widget with the second application program.

The updating display information and loading information in a program screen of the target application program includes:
in a case of starting the second application program, loading data of the second application program and of a first module associated with the first module component; and
displaying, in a target region of a program screen of the second application program, a module identifier of the first module or a link entry for the first module.

The first input may include one or more of any touch input such as tapping input, sliding input, and text input, which is not specifically limited herein.

In this implementation, in a case of starting the second application program, data of the second application program and of a first module associated with the first module component are loaded, and a module identifier of the first module or a link entry for the first module is displayed in a target region of a program screen of the second application program. Thus, at least two application programs can be operated in one application program, and therefore, no application program switching needs to be performed when the user needs to operate the at least two application programs, thereby improving the convenience of operating application programs.

In an optional implementation, the first input may include an input for dragging the first module component to a display region of a second module component in the second widget, where a module corresponding to the second module component has a same module type as the module corresponding to the first module component.

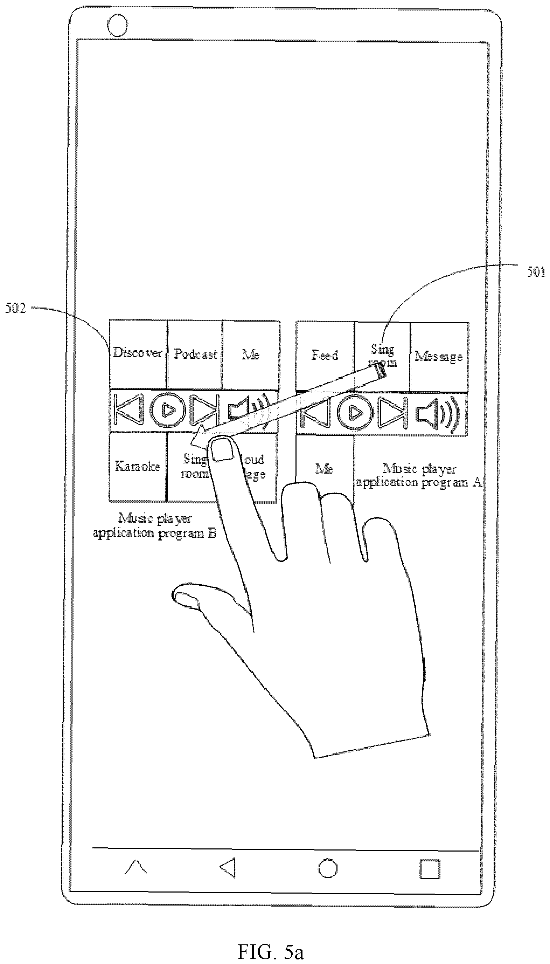

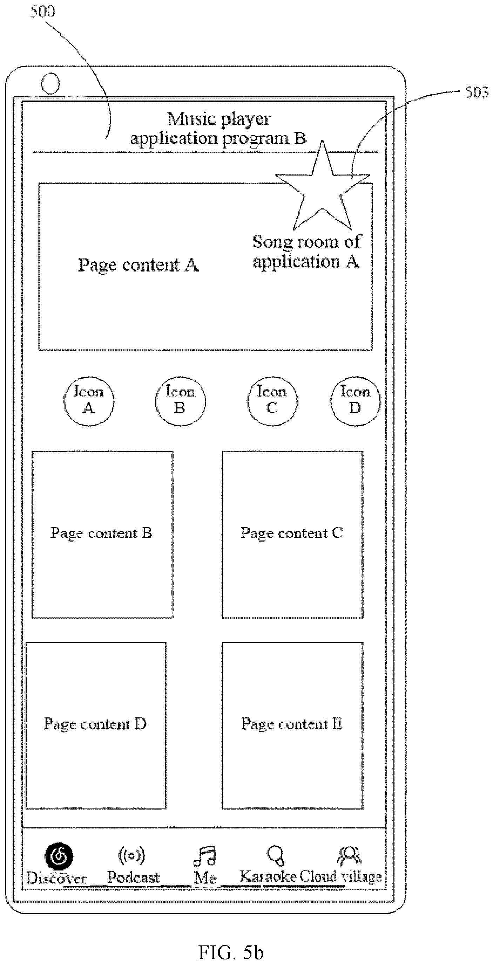

In this implementation, in response to the first input, the link entry for the first module may be displayed in a floating manner on the program screen of the second application program. To be specific, in response to the first input, it can be determined that a target region is a floating display region. For example, as shown in FIG. 5a and FIG. 5b, assuming that the second application program is a music player application program A, and that the third application program is a music player application program B, if a user drags a "Sing room" component 501 associated with a "Sing room" module in the music player application program A into a target widget 502 of the music player application program B, and the user starts the music player application program B, an application program screen 500 as shown in FIG. 5b may be displayed and the application program screen includes a link entry 503 for a module corresponding to the "Sing room" component 501. When the user taps on the link entry 503, the program screen of the "Sing room" module of the music player application program A can be displayed in the music player application program B. In this example, the first input is an input for dragging the first module component to a display region of the second module component in the second widget.

In a specific implementation, the target region may specifically be a floating display region in a page in which the module corresponding to the second module component resides, so that the link entry for the first module is displayed in a floating manner on the page in which the module corresponding to the second module component resides. In this way, similar modules of two different application programs can be displayed on a same application program screen or even in a same page, so that the user can select or compare similar functions of the two different application programs.

In this implementation, similar functions of different application programs may be associated through the first input.

In another optional implementation, the first input may include an input for dragging the first module component to a component display region of the second widget.

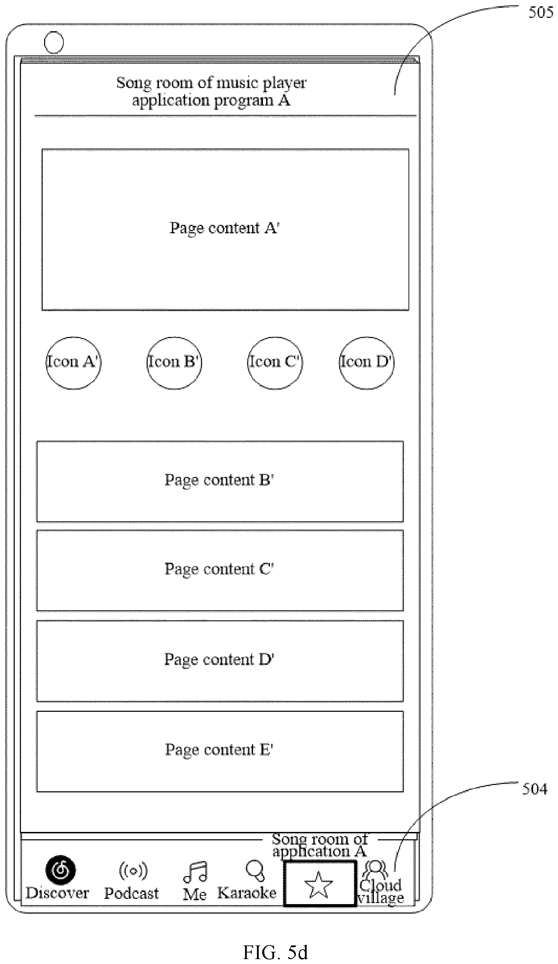

In this implementation, in response to the first input, a module identifier of the first module can be displayed in the menu bar of the program screen of the second application program. To be specific, in response to the first input, it can be determined that the target region is the menu bar. For example, as shown in FIG. 5a and FIG. 5d, assuming that the first application program is a music player application program A, and that the second application program is a music player application program B, if a user drags a "Sing room" component 501 associated with a "Sing room" module in the music player application program A into a target widget 502 of the music player application program B, and the user starts the music player application program B, an application program screen 500 as shown in FIG. 5d may be displayed and a menu bar 504 in the application program screen includes a module identifier corresponding to the "Sing room" component 501. When the user taps on the module identifier, the "Sing room" module of the music player application program A can be displayed in the music player application program B. In this example, the first input is an input for dragging the first module component to a component display region of the second widget.

As compared with the previous optional implementation, in this implementation, the user does not need to determine the position of the second module component that corresponds to a similar function as the first module component before performing a sliding input but directly slides the first module component into the second widget, which can realize the association of the first module component in the first widget with the second application program, with lower operation complexity.

It should be noted that in addition to the above two implementations, the first input can alternatively be used to display an add button or component on the target widget or application icon, and tapping the add button can choose to add an atomic component of another application to the current application program to associate the atomic component of the another application with the current application program. Or, the first input can alternatively be used to add a search bar component in the target widget or application icon, and tapping the search bar and entering a corresponding application program name and an atomic component name can search for an atomic component that matches the atomic component name in another application program, and the found atomic components can be selected and added to the current application program, to associate the atomic components of the another application with the current application program. The input mode and specific process of the first input are not limited herein.

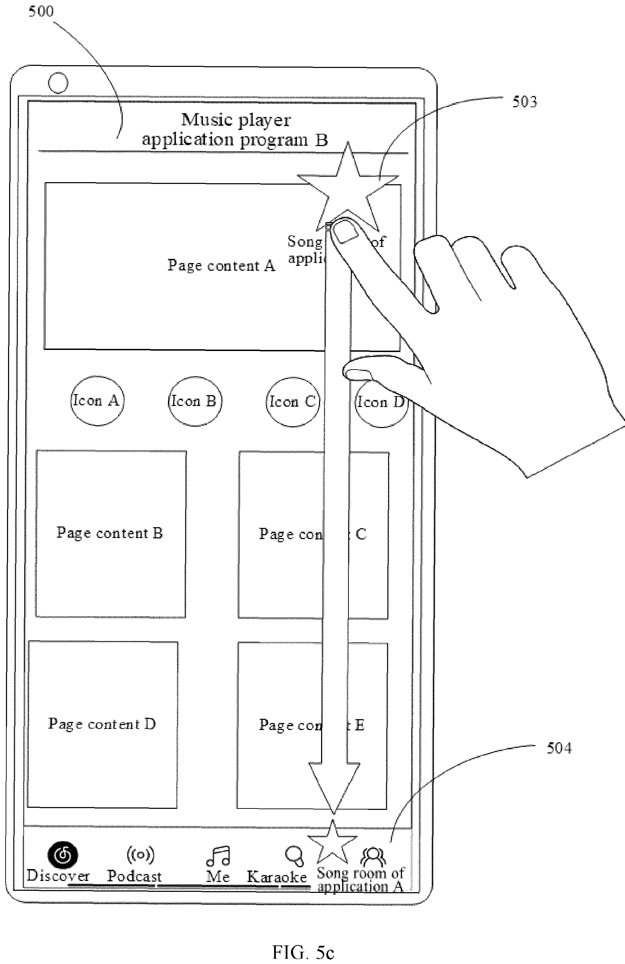

Moreover, the display mode and display position of the module identifier of the first module or the link entry for the first module on the program screen of the second application program can be correspondingly adjusted according to an operation by the user. For example, as shown in FIG. 5c, in a case that the link entry 503 corresponding to the floating sing room component and dragged by the user to the menu bar 504 is received in the application program screen as shown in FIG. 5c, a module identifier 5041 associated with the sing room component can be generated in the menu bar 504, so that when the user taps on the module identifier 5041, the music player application program A is started, and a page 505 corresponding to the sing room component of the music player application program A is displayed.

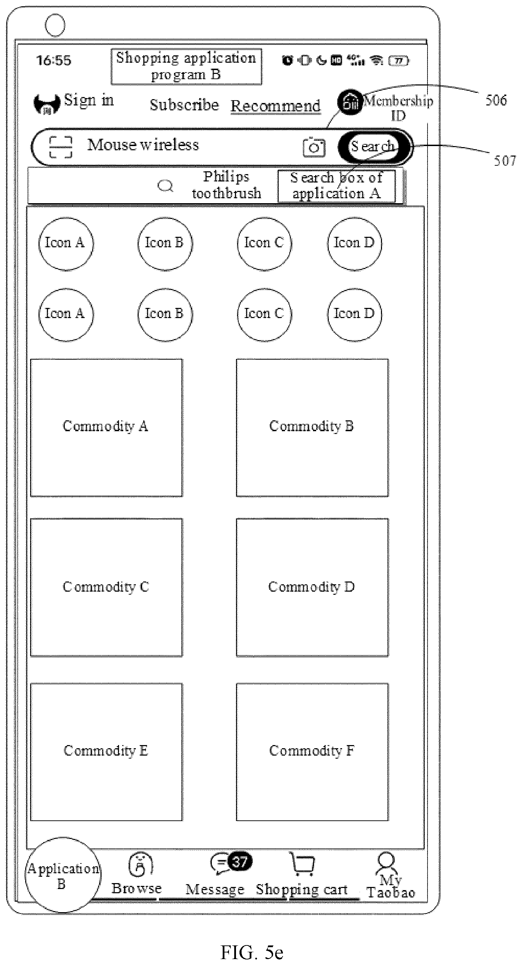

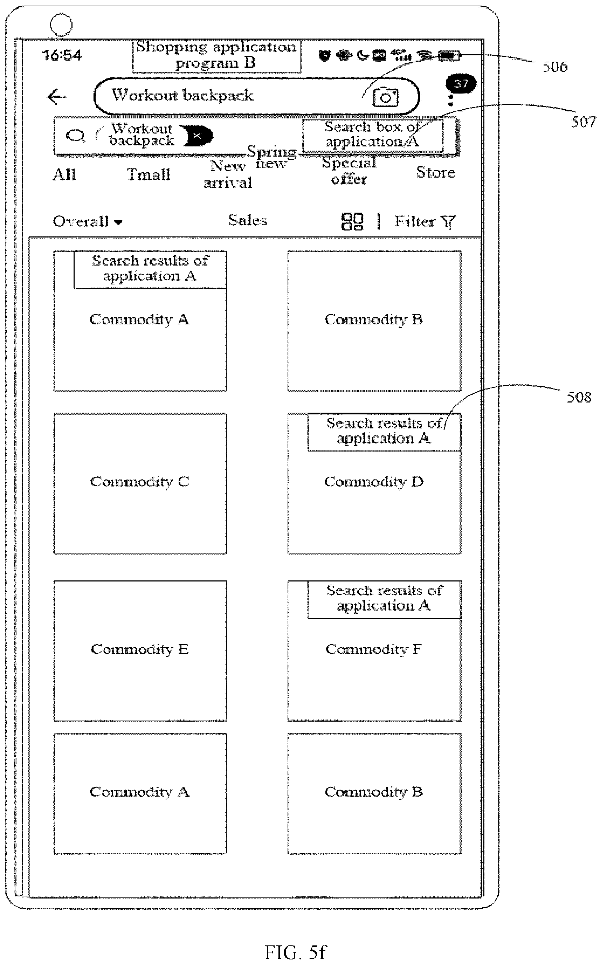

Certainly, in addition to being the menu bar and floating display region, the target region may alternatively be a display region in the program screen of the second application program close to the module corresponding to the second module component. For example, as shown in FIG. 5e and FIG. 5f, assuming that the first application program is a shopping application program A and the second application program is a shopping application program B, after a search component of the shopping application program A is associated with the shopping application program B, a second search bar 507 of the shopping application program A can be displayed near a first search bar 506 of the shopping application program B, and the user inputs search content in at least one of the first search bar 506 and the second search bar 507 to search for commodities. In addition, after corresponding search results are respectively found in the shopping application program A and the shopping application program B, the search results of the shopping application program A and the shopping application program B can be displayed in a same region and in different ways. For example, as shown in FIG. 5f, an identifier 508 of the shopping application program A is displayed on the search results of the shopping application program A, so that it is more convenient to compare the search results of different applications in searching for commodities. Certainly, in this embodiment, the search results of the shopping application program A and the shopping application program B may alternatively be respectively displayed in different regions, for example, displayed in columns, which is not described in detail herein.

It should be noted that, for a specific process of loading data of the second application program and of a first module associated with the first module component, reference may be made to a process of loading data of modules corresponding to components undeleted in the target application program in the previous implementation, which is not described in detail herein.

In this implementation, a first module component in the first widget is associated with the second application program, and in a case of starting the second application program, data of the second application program and of a first module associated with the first module component can be loaded, and a module identifier of the first module or a link entry for the first module is displayed in a target region of a program screen of the second application program. Thus, in addition to the modules of the second application program displayed, the module identifier of the first module associated with the first module component or the link entry for the first module is displayed on the program screen of the second application program, so that a module of the first application program is embedded in the second application program and at least two application programs can be operated in one application program, and therefore, no application program switching needs to be performed when the user needs to operate the at least two application programs, thereby improving the convenience of operating application programs.

In the program control method provided in the embodiments of this application, a target widget of a target application program is displayed, where the target widget includes at least one of a function component and a module component; a first input on the target widget is received; and in response to the first input, display information of the target widget is updated and display information and loading information in a program screen of the target application program are updated; where the updating content of the display information and loading information in the program screen of the target application program are associated with the updating content of the display information of the target widget. In this way, the loading information and display information of the target application program can be adjusted through the operations on the target widget, for example, implementing cutting or merging of modules in the target application program, so as to load and display according to the cut or merged functions and modules, so that the display information and loading information of the target application program are more diversified, thereby improving the flexibility of the display content and loading content of the application program.

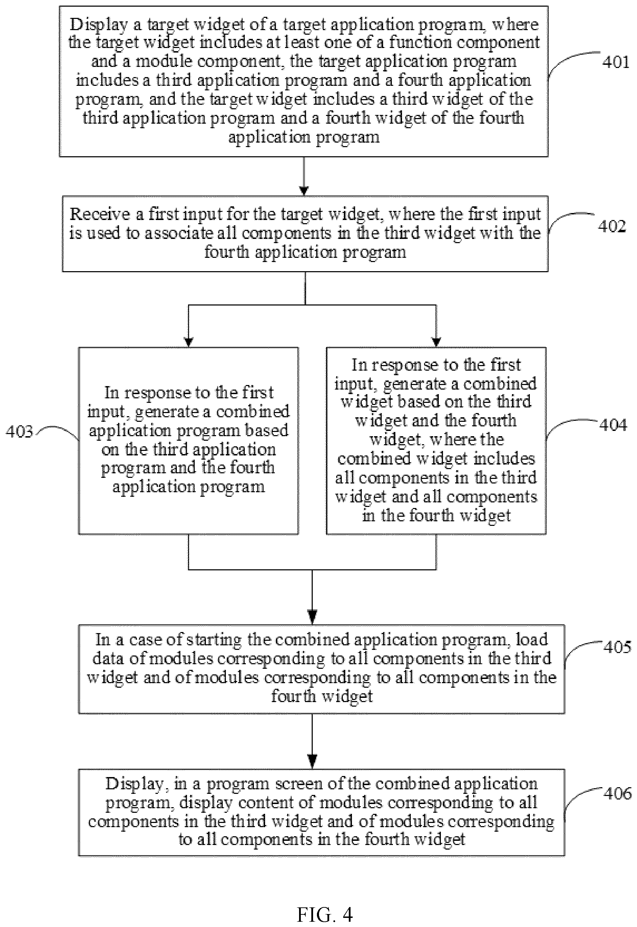

FIG. 4 is a flowchart of another program control method according to an embodiment of this application. The another program control method is similar to the program control method in the method embodiment shown in FIG. 1, except that, in the method embodiment shown in FIG. 4, a new combined application program can be generated by operating the target widgets of different application programs, so that the combined application program can have all functions of the foregoing different application programs. Specifically, as shown in FIG. 4, the another program control method provided in this method embodiment may include the following steps.

Step 401. Display a target widget of a target application program, where the target widget includes at least one of a function component and a module component, the target application program includes a third application program and a fourth application program, and the target widget includes a third widget of the third application program and a fourth widget of the fourth application program.

Step 402. Receive a first input on the target widget, where the first input is used to associate all components in the third widget with the fourth application program.

Step 403. In response to the first input, generate a combined application program based on the third application program and the fourth application program.

Step 404. In response to the first input, generate a combined widget based on the third widget and the fourth widget, where the combined widget includes all components in the third widget and all components in the fourth widget.

Step 405. In a case of starting the combined application program, load data of modules corresponding to all components in the third widget and of modules corresponding to all components in the fourth widget.

Step 406. Display, in a program screen of the combined application program, display content of modules corresponding to all components in the third widget and of modules corresponding to all components in the fourth widget.

In a specific implementation, the first input used to associate all components in the third widget with the fourth application program may be referred to the explanation provided in a previous embodiment of this application regarding the first input used to associate the first module components in the first widget with the second application program. Details are not described herein. Moreover, this embodiment enables direct display of an application program in a screen of another application program and a convenient way to combine two application programs. Furthermore, this embodiment can be combined with various implementations described in the previous embodiment to achieve functional combination, screen arrangement, and customization among different application programs.

In a specific implementation, in a case of starting the combined application program, the loading data of modules corresponding to all components in the third widget and of modules corresponding to all components in the fourth widget can be understood as starting the third application program and the fourth application program in the background and loading data of modules respectively corresponding to all atomic components in the third application program and all atomic components in the fourth application program. For example, the system is responsible for starting original applications (the third application program and the fourth application program) corresponding to the atomic components in the combined widget of the combined application program and loading to memory the dex files to which the modules corresponding to the atomic components in the combined widget pertain, that is, the modules required for starting multiple application programs.

Moreover, after the combined widget is generated, the atomic components in the combined widget can be arranged in a preset order, and the preset order may be a system default order or an order generated according to a particular rule. For example, atomic components corresponding to modules of a similar type in the combined widget are arranged close to each other, or the atomic components of a same application program are arranged close to each other, or the like.

On this basis, the displaying, in a program screen of the combined application program, display content of modules corresponding to all components in the third widget and of modules corresponding to all components in the fourth widget can be understood as follows: The system provides an intermediate layer between the third application program and the fourth application program, and further overlays a final display layer over the intermediate layer, so that on the basis of displaying the screen of the application program A, when the user taps on an atomic component that originally pertains to another application program B, the module corresponding to the atomic component runs in the background and then sends calculation results and pictures to the intermediate layer, and the intermediate layer arranges in a simple way or dynamically mixes these result pages with pages of the currently displayed application program A, and sends a result to the final display layer for the final display layer to determine a picture drawing and displaying mode. For example, the modules in the combined application program can be arranged and displayed according to a default arrangement or according to a user-defined mode. The default arrangement can be understood as a default arrangement rule pre-stored in advance. In a case that the user does not customize the arrangement, the modules in the combined application program can be arranged and displayed according to the pre-stored default arrangement rule.

In this implementation, in a case that all atomic components of the third application program are associated with the fourth application program, a new application program can be generated based on the third application program and the fourth application program, so that the new application program can have all functions of the third application program and the fourth application program.

It should be noted that the method embodiment shown in FIG. 4 can also be combined with the method embodiment shown in FIG. 1. For example, modules corresponding to module components of a sixth application program or even a seventh application program are displayed in the screen of the combined application program, so as to achieve combination, cutting, arrangement, customization, and the like of functions of different application programs. Details are not described herein.

Another program control method provided in this embodiment of this application can realize the generation of a combined application program with all functions of two different application programs, so that pages of at least two application programs can be displayed in a screen of one application program. Therefore, when the user needs to open at least two application programs, only the combined application program formed by the at least two application programs needs to be opened, so as to avoid the need for the user to start at least two application programs and switch between the at least two application programs.

It should be noted that the program control method provided in this embodiment of this application may be performed by a program control apparatus or a control module for performing the program control method in the program control apparatus. In the embodiments of this application, a program control apparatus for performing the program control method is used as an example to describe the program control apparatus provided in this embodiment of this application.

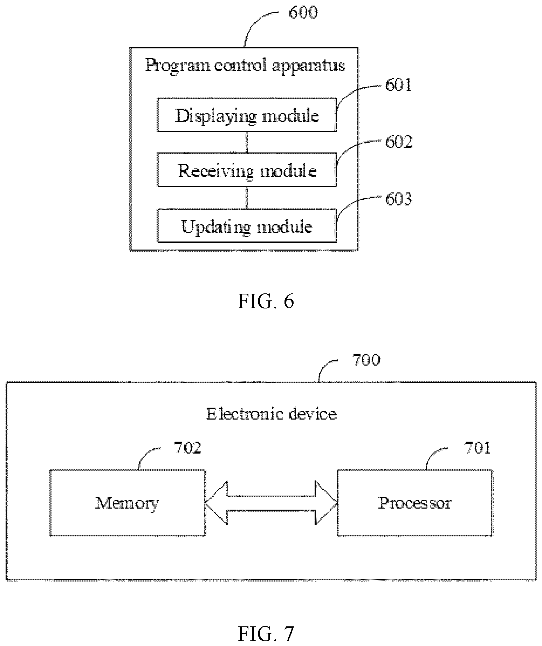

FIG. 6 is a structural diagram of a program control apparatus according to an embodiment of this application. As shown in FIG. 6, the program control apparatus 600 includes:
a displaying module 601 configured to display a target widget of a target application program, where the target widget includes at least one of a function component and a module component;
a receiving module 602 configured to receive a first input on the target widget; and
an updating module 603 configured to, in response to the first input, update display information of the target widget and update display information and loading information in a program screen of the target application program; where the updating content of the display information and loading information in the program screen of the target application program are associated with the updating content of the display information of the target widget.

Optionally, the first input includes an operation input for deleting a first module component in the target widget.

The updating module 603 includes:
a first deleting unit configured to delete the first module component;
a prohibiting unit configured to prohibit loading of data of a module corresponding to the first module component in the target application program; and
a second deleting unit configured to delete display content of the module corresponding to the first module component in the program screen of the target application program.

Optionally, the target widget includes at least one module component and at least one function component; and the first input includes at least one sub-input for deleting all module components in the target widget.

The updating module 603 includes:
an uninstalling unit configured to uninstall the target application program; and
a first loading unit configured to, in a case that a second input performed by a user on a first function component of the at least one function component has been received, load data required for the first function component from a cloud server of the target application program or start a Quick App corresponding to the first function component.

Optionally, the target application program includes a first application program and a second application program, the target widget includes a first widget of the first application program and a second widget of the second application program; and the first input is used to associate a first module component in the first widget with the second application program.

The updating module 603 includes:
a second loading unit configured to, in a case of starting the second application program, load data of the second application program and of a first module associated with the first module component; and
a first displaying unit configured to display, in a target region of a program screen of the second application program, a module identifier of the first module or a link entry for the first module.

Optionally, the first input includes an input for dragging the first module component to a component display region of the second widget.

Alternatively, the first input includes an input for dragging the first module component to a display region of a second module component in the second widget, where a module corresponding to the second module component has a same module type as the module corresponding to the first module component.

Optionally, the target application program includes a third application program and a fourth application program, the target widget includes a third widget of the third application program and a fourth widget of the fourth application program, and the first input is used to associate all components in the third widget with the fourth application program.

The updating module 603 includes:
a first generating unit configured to generate a combined application program based on the third application program and the fourth application program;
a second generating unit configured to generate a combined widget based on the third widget and the fourth widget, where the combined widget includes all components in the third widget and all components in the fourth widget;
a third loading unit configured to, in a case of starting the combined application program, load data of modules corresponding to all components in the third widget and of modules corresponding to all components in the fourth widget; and
a second displaying unit configured to display, in a program screen of the combined application program, display content of modules corresponding to all components in the third widget and of modules corresponding to all components in the fourth widget.

The program control apparatus 600 provided in this embodiment of this application can implement the processes of the method embodiment shown in FIG. 1, FIG. 3, or FIG. 4, and can achieve the same beneficial effects as those in the method embodiment shown in FIG. 1, FIG. 3, or FIG. 4. To avoid repetition, details are not described herein.

The program control apparatus in this embodiment of this application may be an apparatus or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, a vehicle-mounted electronic device, a wearable device, an ultra-mobile personal computer (ultra-mobile personal computer, UMPC), a netbook, or a personal digital assistant (personal digital assistant, PDA), and the non-mobile electronic device may be a network attached storage (Network Attached Storage, NAS), a personal computer (personal computer, PC), a television (television, TV), a teller machine, a self-service machine, or the like. This is not specifically limited in the embodiments of this application.

The program control apparatus in this embodiment of this application may be an apparatus with an operating system. The operating system may be an android (Android) operating system, may be an iOS operating system, or may be another possible operating system. This is not specifically limited in the embodiments of this application.

The program control apparatus provided in this embodiment of this application can implement the processes implemented in the method embodiments in FIG. 1, FIG. 3, or FIG. 4. To avoid repetition, details are not described herein.

Optionally, as shown in FIG. 7, an embodiment of this application further provides an electronic device 700 including a processor 701, a memory 702, and a program or instructions stored in the memory 702 and capable of running on the processor 701, where when the program or instructions are executed by the processor 701, the processes of the embodiments of the program control method shown in FIG. 1, FIG. 3, or FIG. 4 are implemented, with the same technical effects achieved. To avoid repetition, details are not described herein.

It should be noted that the electronic device in this embodiment of this application includes the foregoing mobile electronic device and non-mobile electronic device.

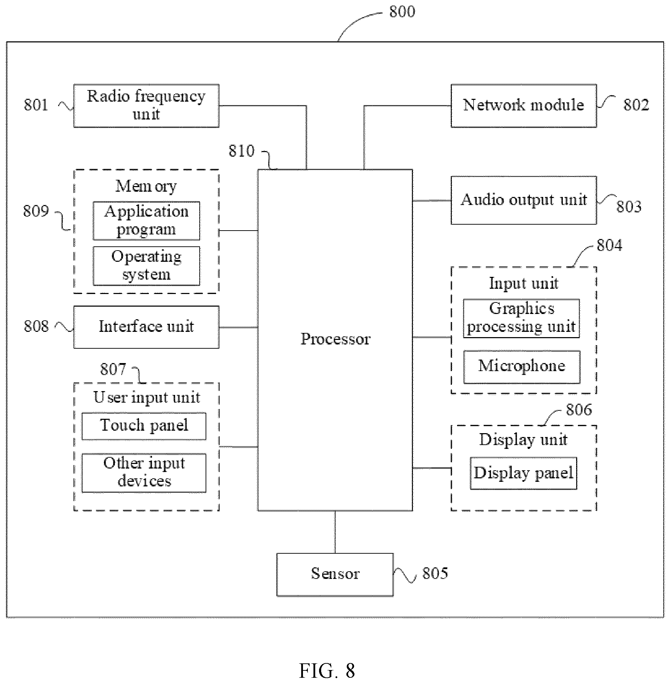

FIG. 8 is a schematic diagram of a hardware structure of an electronic device according to an embodiment of this application.

The electronic device 800 includes but is not limited to components such as a radio frequency unit 801, a network module 802, an audio output unit 803, an input unit 804, a sensor 805, a display unit 806, a user input unit 807, an interface unit 808, a memory 809, and a processor 810.

Persons skilled in the art can understand that the electronic device 800 may further include a power supply (for example, a battery) that supplies power to various components. The power supply may be logically connected to the processor 810 via a power management system, so that functions such as charge and discharge management and power consumption management are implemented via the power management system. The structure of the electronic device shown in FIG. 8 does not constitute a limitation on the electronic device. The electronic device may include more or fewer components than shown in the figure, or combine some of the components, or arrange the components differently. Details are not described herein.

The display unit 806 is configured to display a target widget of a target application program, where the target widget includes at least one of a function component and a module component.

The user input unit 807 is configured to receive a first input on the target widget.

The processor 810 is configured to, in response to the first input, update display information of the target widget and update display information and loading information in a program screen of the target application program, where
the updating content of the display information and loading information in the program screen of the target application program are associated with the updating content of the display information of the target widget.

Optionally, the first input includes an input for deleting a first module component in the target widget.

The updating display information of the target widget and the updating display information and loading information in a program screen of the target application program, performed by the processor 810, include:
deleting the first module component;
prohibiting loading of data of a module corresponding to the first module component in the target application program; and
deleting display content of the module corresponding to the first module component in the program screen of the target application program.

Optionally, the target widget includes at least one module component and at least one function component; and the first input includes at least one sub-input for deleting all module components in the target widget.

The updating display information of the target widget and the updating display information and loading information in a program screen of the target application program, performed by the processor 810, include:
uninstalling the target application program; and
in a case that a second input performed by a user on a first function component of the at least one function component has been received, loading data required for the first function component from a cloud server of the target application program or starting a Quick App corresponding to the first function component.

Optionally, the target application program includes a first application program and a second application program, the target widget includes a first widget of the first application program and a second widget of the second application program; and the first input is used to associate a first module component in the first widget with the second application program.

The updating display information and loading information in a program screen of the target application program, performed by the processor 810, includes:
loading, by the processor 810 in a case of starting the second application program, data of the second application program and of a first module associated with the first module component; and
displaying, by the display unit 806 in a target region of a program screen of the second application program, a module identifier of the first module or a link entry for the first module.

Optionally, the first input includes an input for dragging the first module component to a component display region of the second widget.

Alternatively, the first input includes an input for dragging the first module component to a display region of a second module component in the second widget, where a module corresponding to the second module component has a same module type as the module corresponding to the first module component.

Optionally, the target application program includes a third application program and a fourth application program, the target widget includes a third widget of the third application program and a fourth widget of the fourth application program, and the first input is used to associate all components in the third widget with the fourth application program.

The updating display information of the target widget and the updating display information and loading information in a program screen of the target application program, performed by the processor 810, include:
generating a combined application program based on the third application program and the fourth application program;
generating a combined widget based on the third widget and the fourth widget, where the combined widget includes all components in the third widget and all components in the fourth widget;
in a case of starting the combined application program, loading data of modules corresponding to all components in the third widget and of modules corresponding to all components in the fourth widget; and
controlling the display unit 806 to display, in a program screen of the combined application program, display content of modules corresponding to all components in the third widget and of modules corresponding to all components in the fourth widget.

The electronic device provided in this embodiment of this application can implement the processes of the program control method embodiment shown in FIG. 1, FIG. 3, or FIG. 4, and can achieve the same beneficial effects as those in the program control method embodiment shown in FIG. 1, FIG. 3, or FIG. 4. To avoid repetition, details are not described herein.

It should be understood that in this embodiment of this application, the input unit 804 may include a graphics processing unit (graphics processing unit, GPU) and a microphone. The graphics processing unit processes image data of a static picture or a video that is obtained by an image capture apparatus (for example, a camera) in an image capture mode or a video capture mode. The display unit 806 may include a display panel, and the display panel may be configured in a form of a liquid crystal display, an organic light-emitting diode, or the like. The user input unit 807 includes a touch panel and other input devices. The touch panel is also referred to as a touchscreen. The touch panel may include two parts: a touch detection apparatus and a touch controller. The other input devices may include but are not limited to a physical keyboard, a functional button (such as a volume control button or a power on/off button), a trackball, a mouse, and a joystick. Details are not described herein. The memory 809 may be configured to store software programs and various data, including but not limited to application programs and an operating system. The processor 810 may integrate an application processor and a modem processor, where the application processor mainly processes the operating system, user interfaces, application programs, and the like, and the modem processor mainly processes wireless communication. It can be understood that the modem processor may alternatively be not integrated into the processor 810.

An embodiment of this application further provides a readable storage medium. The readable storage medium may be non-volatile or volatile. The readable storage medium stores a program or instructions. When the program or instructions are executed by a processor, the processes of the program control method embodiment shown in FIG. 1, FIG. 3, or FIG. 4 are implemented, with the same technical effects achieved. To avoid repetition, details are not described herein.

The processor is the processor in the electronic device in the foregoing embodiments. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a computer program product, where the computer program product is stored in a non-transitory storage medium. When the computer program product is executed by at least one processor, the processes of the program control method embodiment shown in FIG. 1, FIG. 3, or FIG. 4 are implemented, with the same technical effects achieved. To avoid repetition, details are not described herein.

An embodiment of this application further provides a chip, where the chip includes a processor and a communications interface, the communications interface is coupled to the processor, and the processor is configured to run a program or instructions to implement the processes of the embodiments of the program control method shown in FIG. 1, FIG. 3, or FIG. 4, with the same technical effects achieved. To avoid repetition, details are not repeated herein.

It should be understood that the chip mentioned in this embodiment of this application may also be referred to as a system-level chip, a system chip, a chip system, a system-on-chip, or the like.

It should be noted that the terms "comprise", "include", or any of their variants in this specification are intended to cover a non-exclusive inclusion, such that a process, method, article, or apparatus that includes a list of elements includes not only those elements but also other elements that are not expressly listed, or further includes elements inherent to such process, method, article, or apparatus. In the absence of more restrictions, an element preceded by "including a ..." does not preclude another same element in the process, method, article, or apparatus that includes the element. In addition, it should be noted that the scope of the method and apparatus in the embodiments of this application is not limited to performing functions in the order shown or discussed, but may further include performing functions at substantially concurrently or in reverse order, depending on the functions involved. For example, the described method may be performed in an order different from the order described, and steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a software product. The software product may be stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in each embodiment of this application.

Embodiments of this application have been described with reference to the accompanying drawings. However, this application is not limited to the foregoing specific implementations. These specific implementations are merely for illustration rather than limitation. Inspired by this application, persons of ordinary skill in the art may develop many other forms which do not depart from the essence of this application and the protection scope of the claims, and all such forms shall fall within the protection scope of this application.

## Claims

1. A program control method, comprising:
displaying a target widget of a target application program, wherein the target widget comprises at least one of a function component and a module component;
receiving a first input on the target widget; and
in response to the first input, updating display information of the target widget and updating display information and loading information in a program screen of the target application program; wherein
the updating content of the display information and loading information in the program screen of the target application program are associated with the updating content of the display information of the target widget.

2. The method according to claim 1, wherein the first input comprises an input for deleting a first module component in the target widget; and
the updating display information of the target widget and the updating display information and loading information in a program screen of the target application program comprise:
deleting the first module component;
prohibiting loading of data of a module corresponding to the first module component in the target application program; and
deleting display content of the module corresponding to the first module component in the program screen of the target application program.

3. The method according to claim 1, wherein the target widget comprises at least one module component and at least one function component; and the first input comprises at least one sub-input for deleting all module components in the target widget; and
the updating display information of the target widget and the updating display information and loading information in a program screen of the target application program comprise:
uninstalling the target application program; and
in a case that a second input performed by a user on a first function component of the at least one function component has been received, loading data required for the first function component from a cloud server of the target application program or starting a Quick App corresponding to the first function component.

4. The method according to claim 1, wherein the target application program comprises a first application program and a second application program, the target widget comprises a first widget of the first application program and a second widget of the second application program, and the first input is used to associate a first module component in the first widget with the second application program; and
the updating display information and loading information in a program screen of the target application program comprises:
in a case of starting the second application program, loading data of the second application program and of a first module associated with the first module component; and
displaying, in a target region of a program screen of the second application program, a module identifier of the first module or a link entry for the first module.

5. The method according to claim 4, wherein the first input comprises an input for dragging the first module component to a component display region of the second widget; or,
the first input comprises an input for dragging the first module component to a display region of a second module component in the second widget, wherein a module corresponding to the second module component has a same module type as the module corresponding to the first module component.

6. The method according to claim 1, wherein the target application program comprises a third application program and a fourth application program, the target widget comprises a third widget of the third application program and a fourth widget of the fourth application program, and the first input is used to associate all components in the third widget with the fourth application program; and
the updating display information of the target widget and the updating display information and loading information in a program screen of the target application program comprise:
generating a combined application program based on the third application program and the fourth application program;
generating a combined widget based on the third widget and the fourth widget, wherein the combined widget comprises all components in the third widget and all components in the fourth widget;
in a case of starting the combined application program, loading data of modules corresponding to all components in the third widget and of modules corresponding to all components in the fourth widget; and
displaying, in a program screen of the combined application program, display content of modules corresponding to all components in the third widget and of modules corresponding to all components in the fourth widget.

7. A program control apparatus, comprising:
a displaying module configured to display a target widget of a target application program, wherein the target widget comprises at least one of a function component and a module component;
a receiving module configured to receive a first input on the target widget; and
an updating module configured to, in response to the first input, update display information of the target widget and update display information and loading information in a program screen of the target application program; wherein
the updating content of the display information and loading information in the program screen of the target application program are associated with the updating content of the display information of the target widget.

8. The apparatus according to claim 7, wherein the first input comprises an operation input for deleting a first module component in the target widget; and
the updating module comprises:
a first deleting unit configured to delete the first module component;
a prohibiting unit configured to prohibit loading of data of a module corresponding to the first module component in the target application program; and
a second deleting unit configured to delete display content of the module corresponding to the first module component in the program screen of the target application program.

9. The apparatus according to claim 7, wherein the target widget comprises at least one module component and at least one function component; and the first input comprises at least one sub-input for deleting all module components in the target widget; and
the updating module comprises:
an uninstalling unit configured to uninstall the target application program; and
a first loading unit configured to, in a case that a second input performed by a user on a first function component of the at least one function component has been received, load data required for the first function component from a cloud server of the target application program or start a Quick App corresponding to the first function component.

10. The apparatus according to claim 7, wherein the target application program comprises a first application program and a second application program, the target widget comprises a first widget of the first application program and a second widget of the second application program, and the first input is used to associate a first module component in the first widget with the second application program; and
the updating module comprises:
a second loading unit configured to, in a case of starting the second application program, load data of the second application program and of a first module associated with the first module component; and
a first displaying unit configured to display, in a target region of a program screen of the second application program, a module identifier of the first module or a link entry for the first module.

11. The apparatus according to claim 10, wherein the first input comprises an input for dragging the first module component to a component display region of the second widget; or,
the first input comprises an input for dragging the first module component to a display region of a second module component in the second widget, wherein a module corresponding to the second module component has a same module type as the module corresponding to the first module component.

12. The apparatus according to claim 7, wherein the target application program comprises a third application program and a fourth application program, the target widget comprises a third widget of the third application program and a fourth widget of the fourth application program, and the first input is used to associate all components in the third widget with the fourth application program; and
the updating module comprises:
a first generating unit configured to generate a combined application program based on the third application program and the fourth application program;
a second generating unit configured to generate a combined widget based on the third widget and the fourth widget, wherein the combined widget comprises all components in the third widget and all components in the fourth widget;
a third loading unit configured to, in a case of starting the combined application program, load data of modules corresponding to all components in the third widget and of modules corresponding to all components in the fourth widget; and
a second displaying unit configured to display, in a program screen of the combined application program, display content of modules corresponding to all components in the third widget and of modules corresponding to all components in the fourth widget.

13. An electronic device, comprising a processor, a memory, and a program or instructions stored in the memory and capable of running on the processor, wherein when the program or instructions are executed by the processor, the steps of the program control method according to any one of claims 1 to 6 are implemented.

14. A readable storage medium, wherein the readable storage medium stores a program or instructions, and when the program or instructions are executed by a processor, the steps of the program control method according to any one of claims 1 to 6 are implemented.

15. A chip, comprising a processor and a communications interface, wherein the communications interface is coupled to the processor, and the processor is configured to run a program or instructions so as to implement the program control method according to any one of claims 1 to 6.

16. A computer program product, wherein the computer program product is stored in a non-transitory readable storage medium, and the computer program product is executed by at least one processor to implement the steps of the program control method according to any one of claims 1 to 6.
